# EUROPEAN PATENT APPLICATION

(11) **EP 2 083 360 A1**
(43) Date of publication of application: **29.07.2009**
(21) Application number: 08001334.5
(22) Date of filing: 24.01.2008
(51) Int. Cl.: G06F 17/30

(54) **Reviewing method for patent search results**

(71) Applicant: Sunonwealth Electric Machine Industry Co., Ltd., Kaohsiung City (TW)
(72) Inventor: Horng, Alex, Ling Ya District, Kaohsiung City (TW); Huang, Chung-Jen, Ling Ya District, Kaohsiung City (TW)
(74) Representative: Kador & Partner

(57) **Abstract**

A display method for patent search results comprises the steps of: first providing a display list for entering at least one search term via a patent-searching interface, automatically conducting a patent search through an executive program and downloading at least one computer file of at least one patent document matching said search term; copying literal contents in at least one representative section of each computer file into the display list; and displaying the display list by the patent-searching interface.

## Description

### BACKGROUND OF THE INVENTION

### 1. Field of the Invention

The present invention relates to a review method for patent search results. More particularly, the present invention relates to the review method copying at least parts of the public information of at least one acquired patent into a display list, so as to briefly show the acquired patent.

### 2. Description of the Related Art

Currently, most of web sites of the official patent offices include at least one patent-searching web page, i.e. patent database, with said patent-searching web page providing at least one search column. In conducting a patent search, by use of a client/server model, a user can enter a key word, i.e. user's search term, such as a key word of title, a filing date, a patented date or an applicant name via connecting the user to a server. Accordingly, one or more of computer files of patent documents matching for the user's search term may be obtained.

Generally, when the user want to examine the information of the computer files after conducting a patent search, the user has to download said computer files or directly open the computer files at the server, so as to acquire the public information of the patent documents for trend analysis, patent infringement evaluations or product marketing. However, once the user enters a search term to conduct a patent search, a huge amount of matched patent documents may be obtained, and the corresponding computer files thereof need to be downloaded or opened one by one afterward. The above process is a waste of search time and labor cost. Consequently, the conventional display method for patent search results in lower efficiency of examination of acquired patent documents.

As is described in greater detail below, the present invention intends to provide a display method for patent search. The display method utilizes a patent-searching interface for entering at least one search term and auto-links to a patent-searching web page according to the search term through an executive program, so as to download the computer file of at least one patent document. The literal contents of the computer file are copied into a display list for a user to quickly examine the public information disclosed by said at least one patent document. Thereby, the efficiency of examination is raised and the search time is decreased.

### SUMMARY OF THE INVENTION

The primary objective of this invention is to provide a reviewing method for patent search results, which auto-links to a patent-searching web page through an executive program to conduct a patent search. Literal contents of at least one patent document matching at least one search term are copied into a display list for a user to quickly examine public information of said patent document. Accordingly, this method is successful in improving the efficiency of examination.

The secondary objective of this invention is to provide the reviewing method for patent search results, which judges whether the at least one acquired patent document is useful through the executive program and records patent numbers into a forsaking list if any useless patent document exists. Thereby, downloading useless patent documents is avoided. Accordingly, this method is successful in decreasing the load of the patent-searching operation.

Another objective of this invention is to provide the reviewing method for patent search results, which auto-links to a patent-searching web page through an executive program to conduct a patent search. Accordingly, the display method is successful in saving search time.

The reviewing method for patent search results in accordance with an aspect of the present invention includes the steps of: providing a display list previously for entering at least one search term by a patent-searching interface, so as to automatically conduct a patent search through an executive program and download at least one computer file of at least one patent document matching said search term; copying literal contents in at least one representative section of each computer file into the display list; and displaying the display list by the patent-searching interface.

In a separate aspect of the present invention, the method further includes the step of: after finishing the patent search and before downloading the at least one computer file, or after downloading the at least one computer file and before copying the literal contents, recognizing the literal contents of the at least one computer file, judging whether the acquired patent document matches a patent search strategy, and copying patent numbers of patents into a forsaking list if the patents are irrelevant to the patent search strategy.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
FIG. 1 is a block diagram illustrating a computer system for a reviewing method in accordance with a preferred embodiment of the present invention;
FIG. 2 is a flow chart illustrating a reviewing method for patent search results in accordance with a preferred embodiment of the present invention;
FIG. 3 is a schematic view of a display list of a reviewing method for patent search results in accordance with the preferred embodiment of the present invention;
FIG. 4 is a detailed flow chart illustrating a reviewing method for patent search results in accordance with a preferred embodiment of the present invention; and
FIG. 5 is a schematic view of a display list in use according to the preferred embodiment of the present invention.

### DETAILED DESCRIPTION OF THE INVENTION

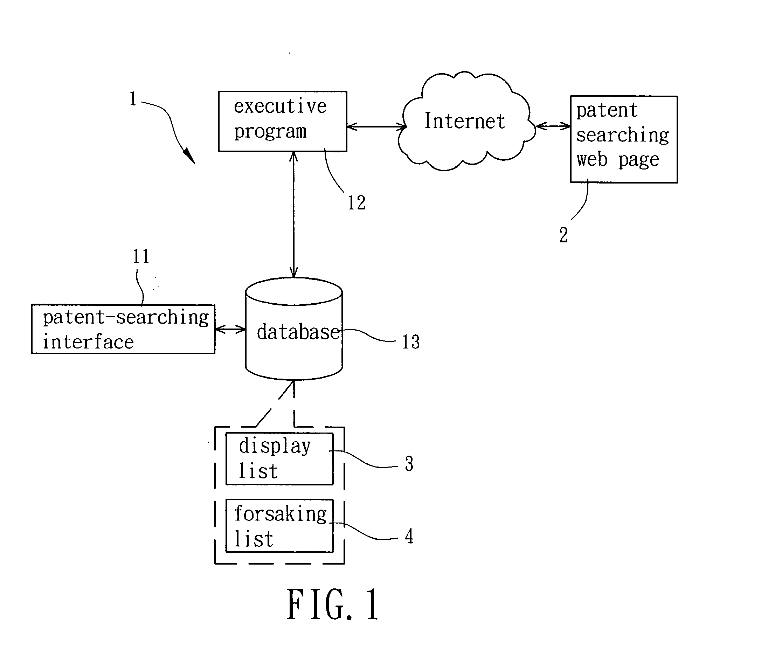

Referring now to FIG. 1, a computer system for a reviewing method for patent search results in accordance with a preferred embodiment of the present invention is illustrated. The computer system 1 comprises a patent-searching interface 11, an executive program 12 and a database 13. The patent-searching interface 11, which is the hardware of the computer system 1, is employed for entering at least one search term by a user and determining a period of search time for the executive program 12 to search. The executive program 12 links to a patent-searching web page 2 through Internet, so as to search for and acquire computer files of at least one patent document according to said at least one search term and search time. The database 13 is utilized to store a display list 3 and a forsaking list 4 at least.

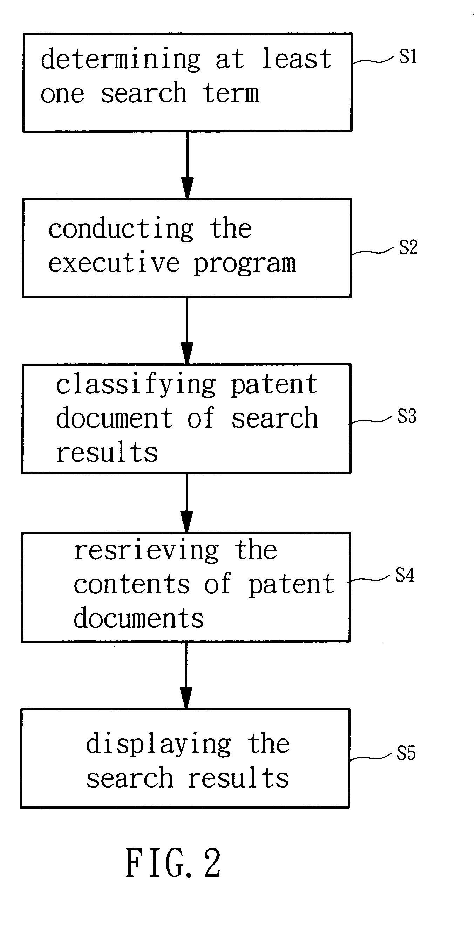

Turning now to FIG. 2, through the computer system shown in FIG.1, the display method for patent search is proceeded, which comprises the steps of: determining at least one search term designated as step "S1"; conducting the executive program 12 designated as step "S2"; classifying patent documents of search results designated as step "S3", which is skip-able; retrieving the contents of patent documents designated as step "S4"; and displaying the search results designated as step "S5". A user is able to complete an examination over at least one patent document through said steps fast and accurately.

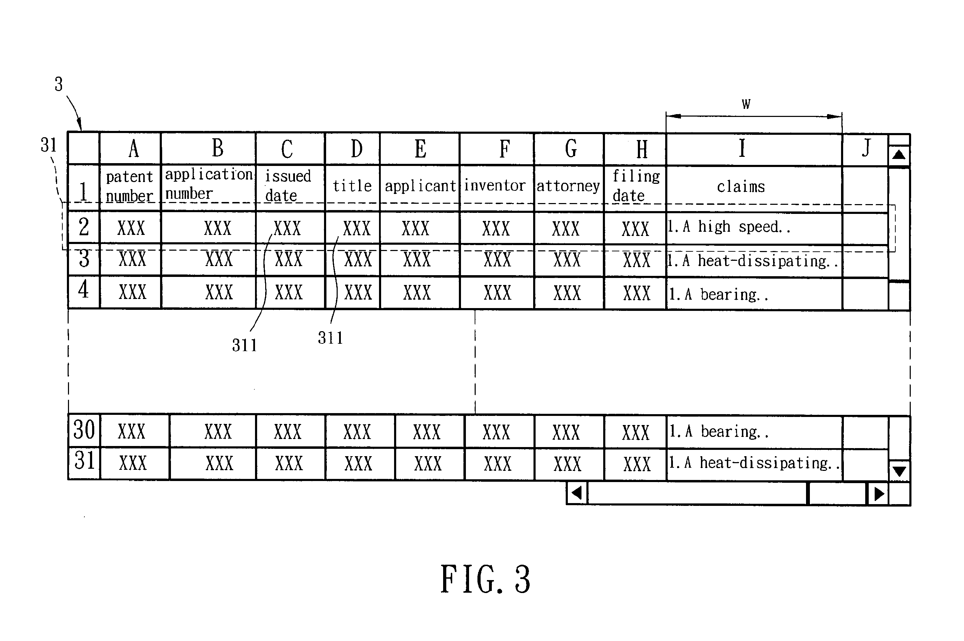

With reference to FIG. 3, in accordance with the preferred embodiment of the present invention, the display list 3 is preferably in an electronic form that can be shown by the patent-searching interface 11, such as a computer file of "Microsoft Excel" or the like. The display list 3 substantially comprises a plurality of rows 31, and each of the rows 31 provides a series of cells 311, so as to store the literal contents of a patent document in the cells 311. Furthermore, the field length "w" of the cells 311 can be changed through a draw tool, such as a mouse, a keyboard, a touch panel etc., and thereby, a user can read all the key technique and relative public information completely and fast.

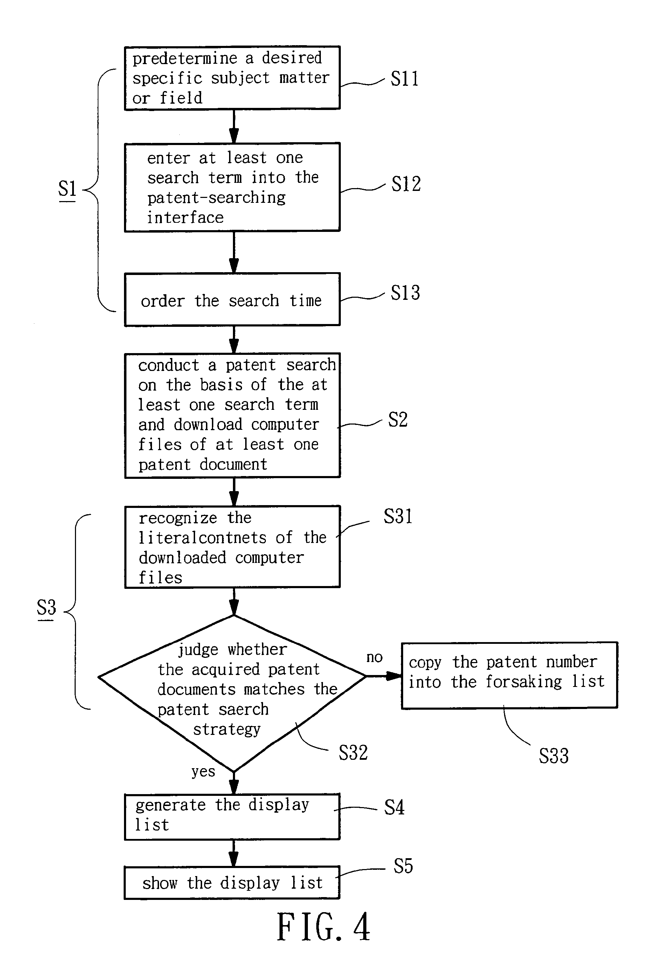

Referring now to FIG. 4, a detailed flow chart illustrating the display method in accordance with the preferred embodiment of the present invention is shown. Regarding to step "S1" in FIG. 1, an analysis for the demand is proceeded to determine a patent search strategy. For example, a user can predetermine a desired specific subject matter or field, which action is designated as act "S11". At least one search term is further entered into the patent-searching interface 11 in act "S12". According to the patent search strategy, the search term is preferably at least a key word of at least one of title, applicant name, achieved objective and efficacy, detailed description, and problems desired to be solved, which are relative to the desired specific subject matter. Besides, through a setting of the search term, the executive program 12 can sequentially search a plurality of patent-searching web pages 2, such as a patent-searching web page 2 of TIPO, USPTO, EPO, JPO, SIPO etc. Furthermore, the processing time of the executive program 12, namely the search time, can also be ordered through the patent-searching interface 11, which action is designated as act "S13", so as to let the executive program 12 conduct a patent search according to the search term during the search time.

Regarding to step "S2", with the following action being designated as act "S21" in FIG. 4, the executive program 12 links to a patent-searching web page 2 through Internet, automatically conducts a patent search on the basis of the at least one search term, and then downloads computer files of at least one patent document into the database 13 when finishing the patent search. Therefore, at least one patent document matching said search term is acquired. The patent document may be a patent specification, a patent publication bulletin or a related publishing document.

Regarding to step "S3", three actions are proceeded and designated as acts "S31", "S32" and "S33" that are shown in FIG. 4. Act "S31" presents that the executive program 12 recognizes the literal contents of the downloaded computer files. Besides, when act "S31" is proceeded, the executive program 12 identifies the original format of the computer file and transforms it into a usable format that is suitable for the display list 3 if the original format is different from the usable format. For example, if the downloaded computer file is in "pdf" format and the display list 3 is in "xls" format that is usable for "Microsoft Excel", the executive program 12 will transform the downloaded computer file into a file in "xls" format. However, if the original format of the computer file is suitable for the display list 3, described transformation is omitted. After accomplishing act "S31", act "S32" follows, in which the executive program 12 further judges whether the acquired patent document matches the patent search strategy. For example, when the patent search strategy is set to search patent documents in a specific field, such as "heat dissipating fan", the executive program 12 identifies the field of the acquired patent document to distinguish between usable and unusable through the codes of IPC. Accordingly, the patent number of the patent document that is irrelevant to the patent search strategy is copied into the forsaking list 4, which action is designated as act "S33". Thereby, when a patent search with the same search term is conducted, downloading the same irrelevant patent document is avoidable.

Alternatively, act "S32" and act "S33" can be omitted from step "S3" but inserted into step "S2". In detail, the executive program 12 may proceed acts "S32" and "S33" before downloading the computer files when the patent search is done.

In step "S4", an action, which is designated as act "S41" in FIG.4, is proceeded and described as the following. Each of the computer files of said patent documents is respectively copied into each of the rows 31 of the display list 3 in sequence, with the literal contents of different representative sections of said patent documents being filled in different cells 311. For example, when the patent document is a patent publication bulletin, the representative sections include patent number, application number, title, applicant, inventor, attorney, filing date, issued date, claims, abstract etc. As a result, the literal contents of at least parts of the representative sections of patent documents are copied into the rows 31 of the display list 3, with each row 31 only containing the literal contents of an identical patent document.

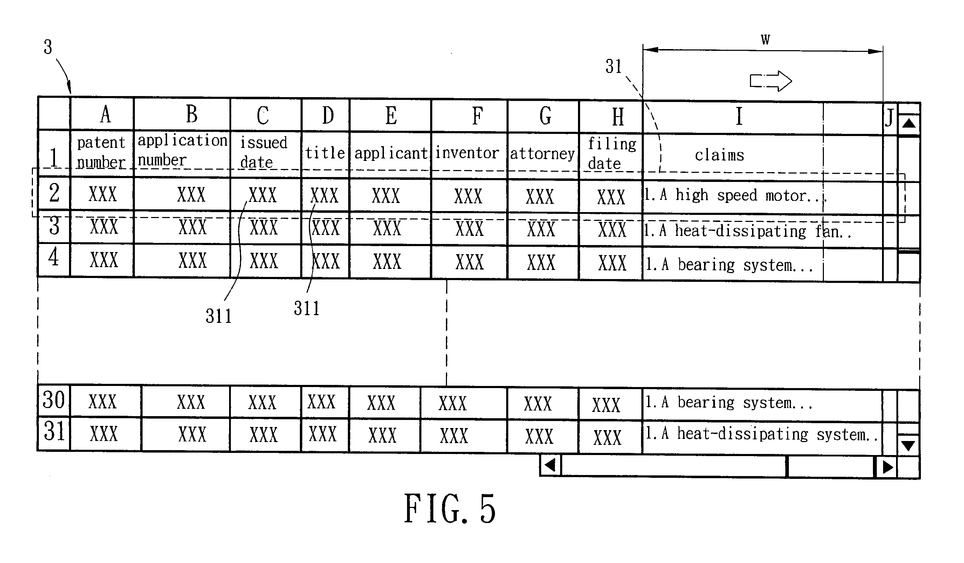

Regarding to step "S5", the display list 3 is displayed for a user to examine, which is designated as act "S51" in FIG.4. Within act "S51", the user may change the field length "w" of the cells 311 by selecting a frame-edge of the cells 311 and moving the frame-edge through a draw tool, so as to enlarge the cells 311 to show the literal contents therein completely. An example of the motion that elongating the field length "w" of the cells 311 is exactly shown in FIG.5, wherein the frame-edge of the cells 311 is moved laterally.

As has been discussed above, the conventional process to conduct patent search and examine the result thereof causes a waste of search time and labor cost. Conversely, the display method for patent search in accordance with the present invention automatically links to a patent-searching web page 2 through the executive program 12 for fast conducting the patent search, downloads the computer file of the at least one patent document, and copies literal contents of the computer file into the display list 3. Therefore, instead of downloading or opening the computer files of plural patent documents one by one, a user can simultaneously examine a plurality of important contents and key techniques disclosed by said patent documents through the display list 3 and acquire demanded information fast.

Although the invention has been described in detail with reference to its presently preferred embodiment, it will be understood by one of ordinary skill in the art that various modifications can be made without departing from the spirit and the scope of the invention, as set forth in the appended claims.

## Claims

1. A reviewing method for patent search results, comprising the steps of:
providing a display list, which comprises a plurality of rows and each of the rows has a plurality of cells;
entering at least one search term by a patent-searching interface and automatically conducting a patent search through an executive program;
downloading at least one computer file of at least one patent document through the executive program when finishing the patent search, with the patent document matching said search term and the computer file having a plurality of representative sections;
copying literal contents in at least one representative section of each computer file into the cells of the rows of the display list; and
displaying the display list by the patent-searching interface, with the field length of each cell being changeable to show the literal contents therein completely.

2. The reviewing method for patent search results as defined in claim 1, wherein, after finishing the patent search and before downloading the at least one computer file, or after downloading the at least one computer file and before copying the literal contents, the executive program recognizes the literal contents of the at least one computer file, judges whether the acquired patent document matches a patent search strategy, and copies patent numbers of patents into a forsaking list if the patents are irrelevant to the patent search strategy.

3. The reviewing method for patent search results as defined in claim 1, wherein the executive program identifies the format of the at least one downloaded computer file and transforms it into a format that is suitable for the display list before copying the literal contents.

4. The reviewing method for patent search results as defined in claim 2, wherein the executive program identifies the format of the at least one downloaded computer file and transforms it into a format that is suitable for the display list before copying the literal contents.

5. The reviewing method for patent search results as defined in claim 1, wherein the literal contents in all of the representative sections of each computer file are copied into the cells of the rows of the display list.

6. The reviewing method for patent search results as defined in claim 2, wherein the literal contents in all of the representative sections of each computer file are copied into the cells of the rows of the display list.

7. The reviewing method for patent search results as defined in claim 1, wherein the at least one representative sections comprises at least one of patent number, application number, title, applicant, inventor, attorney, filing date, issued date, claims, and abstract.

8. The reviewing method for patent search results as defined in claim 2, wherein the at least one representative sections comprises at least one of patent number, application number, title, applicant, inventor, attorney, filing date, issued date, claims, and abstract.

9. The reviewing method for patent search results as defined in claim 1, wherein the display list is in an electronic form that is able to be shown by the patent-searching interface, wherein the electronic form is the same as that of a computer file of "Microsoft Excel".

10. The reviewing method for patent search results as defined in claim 2, wherein the display list is in an electronic form that is able to be shown by the patent-searching interface, wherein the electronic form is the same as that of a computer file of "Microsoft Excel".

11. The reviewing method for patent search results as defined in claim 1, wherein a period of search time is entered through the patent-searching interface while the at least one search term is entered.

12. The reviewing method for patent search results as defined in claim 2, wherein a period of search time is entered through the patent-searching interface while the at least one search term is entered.

## Amended claims

### Amended claims in accordance with Rule 137(2) EPC.

**1.** A reviewing method for patent search results, comprising the steps of:
providing a display list (3), which comprises a plurality of rows 31 and each of the rows has a plurality of cells (311);
entering at least one search term by a user via a patent-searching interface (11) and automatically conducting a patent search through an executive program (12):
downloading at least one computer file of at least one patent document through the executive program (12) after finishing the patent search, with the patent document matching said search term and the computer file having a plurality of representative sections;
copying literal contents in at least one representative section of each computer file into the cells of the rows of the display list (3): and
displaying the display list (3) by the patent-searching interface (11), with the field length of each cell being changeable to show the literal contents therein completely; wherein, after finishing the patent search and before downloading the at least one computer file and before copying the literal contents, the executive program (12) recognizes the literal contents of the at least one computer file, judges whether the acquired patent document matches a patent search strategy, and copies patent numbers of patents into a forsaking list (4) if the patents are irrelevant to the patent search strategy.

**2.** The reviewing method for patent search results as defined in claim 1, wherein the executive program (12) identifies the format of the at least one downloaded computer file and transforms it into a format that is suitable for the display list (3) before copying the literal contents.

**3.** The reviewing method for patent search results as defined in claim 1, wherein the literal contents in all of the representative sections of each computer file are copied into the cells (311) of the rows (31) of the display list (3).

**4.** The reviewing method for patent search results as defined in claim 1, wherein the at least one representative sections comprises at least one of patent number, application number, title, applicant, inventor, attorney, filing date, issued date, claims, and abstract.

**5.** The reviewing method for patent search results as defined in claim 1, wherein the display list (3) is in an electronic form that is able to be shown by the patent-searching interface (11), wherein the electronic form is the same as that of a computer file of "Microsoft Excel".

**6.** The reviewing method for patent search results as defined in claim 1, wherein a period of search time is entered through the patent-searching interface (11) while the at least one search term is entered.
